# EUROPEAN PATENT SPECIFICATION

(11) **EP 4 499 464 B1**
(45) Date of publication and mention of the grant of the patent: **03.06.2026**
(21) Application number: 22720340.3
(22) Date of filing: 31.03.2022
(51) Int. Cl.: B60T 7/04, B60T 8/38, B60T 8/48, B60T 11/20, B60T 11/16, B29C 45/00

(54) **A BRAKE VALVE WITH A MAGNET HOLDER FOR A POSITION SENSOR**
EIN BREMSVENTIL MIT EINEM MAGNETHALTER FÜR EINEN POSITIONSSENSOR
UNE VALVE DE FREIN AVEC UN SUPPORT D'AIMANT POUR UN CAPTEUR DE POSITION

(43) Date of publication of application: 05.02.2025
(73) Proprietor: ZF CV Systems Europe BV, 1170 Brüssel (BE)
(72) Inventor: ADAMSKI, Krzysztof, 53-205 Wroclaw (PL); JAWORSKI, Krzysztof, 51-514 Wroclaw (PL); KESKA, Marcin, 54-062 Wroclaw (PL); MIKSA, Kamil, 98-300 Wielun (PL); RIEDIGER-JANISCH, Karl-Heinz, 30455 Hannover (DE)
(74) Representative: Schäferjohann, Volker
(86) International application number: PCT/EP2022/058614
(87) International publication number: WO 2023/186313

(56) References cited:
- EP-A1- 3 905 284
- WO-A1-2004/089714
- WO-A1-2016/012066
- US-A1- 2008 295 632
- US-A1- 2018 261 386

## Description

The invention relates to a brake valve for providing a brake pressure to a vehicle brake system, preferably a vehicle brake system of a commercial vehicle. In accordance with the present invention, the term "brake valve" encompasses a brake pressure modulator, a brake signal transmitter (BST), a foot brake valve (FBV), a service brake actuator assocated with e.g., a pedal and/or any valve that directly transmits driver's brake demand to a pneumatic, electronic and/or an electropneumatic brake system. The brake valve comprising a housing and a pressure piece. The pressure piece is configured to apply a force to at least one valve system caused by a brake input and is slidably arranged in the housing along a valve axis between a neutral position and an actuation position. In an embodiment, the brake valve further comprising a magnet forming the moving part of a position sensor or a stroke sensor, the position sensor configured to detect the position of the pressure piece and the degree of brake actuation. The magnet is arranged in the housing and is attached to the pressure piece by a magnet support.

Brake valves of the aforementioned type are known e.g. from WO 2016/012066 A1. The aforementioned brake valves operate as a function of pressurized fluid being provided from a pressure source to a brake actuator. By opening the at least one valve system, pressurized air is provided to the brake actuator at a brake pressure that corresponds to the position of the pressure piece between the neutral position and the actuation position. The pressure piece is movable between the neutral position and the fully actuated position by an operator of the vehicle or based on electronic brake signals. For example, the pressure piece may be biased in the neutral position and is movable from the neutral position via a foot pedal attached to the pressure piece. When a user pushes the pedal, the pressure piece is moved. As soon as the user releases the pedal, the pressure piece returns to the neutral position.

Further, the aforementioned brake valve has both a pneumatic brake signal transmitter and an electric brake signal transmitter for controlling the brake actuators. The functionality of the pneumatic brake signal transmitter is described in, for instance, DE 4232146A1. However, the electric brake signal transmitter comprises a measuring unit for detecting the brake demand. The measuring unit detects the position of a pressure plate with a toggle switch, a movable part of a position sensor is arranged on the pressure plate and a stationary part of a position sensor is arranged in a housing in order to determine the brake demand. The toggle switch is used to register the begin of the actuation of the pressure plate and the position sensor is used to determine the position of the pressure plate. The toggle switch and the movable part of the position sensor are arranged in a cavity and are inserted in a radially accessible recess of the pressure plate.

It is therefore one of the objects of the invention to provide an improved brake valve that allows for a more efficient assembling.

WO 2004/089714 A1 discloses a device for monitoring the position and movement of a brake pedal. In order to enable monitoring of a push rod piston even during a driving dynamics control process, it is proposed that the magnet is arranged between two pistons and is provided so as to be displaceable relative to at least one of the pistons. US 2018/261386 A1 relates to a forming method for producing a composite part for an operating member, the method comprising the steps: disposing at least one permanent magnet in an injection-molding tool, which defines a mold cavity, and a heat-conducting reinforcement, which extends along the permanent magnet and is in touching contact with the injection-molding tool, in each case at a predefined position of the mold cavity; overmolding the permanent magnet with molding material by introducing molding material into the mold cavity; forming the composite part having the at least one permanent magnet, the heat-conducting reinforcement and the molding material. US 2008/295632 A1 relates to a shift module for a shift lever of an automatic gear drive, which is suitable to indicate the shift positions of a shift lever particularly for the manual shift mode.

Among others, the above-mentioned object of the present invention is achieved by the invention according to claim 1, in particular with a brake valve, wherein the magnet support comprises a saddle portion, which is detachably connected with the pressure piece and/or is configured to form a detachable clip connection with the pressure piece. For instance, the detachable connection between the saddle portion and the pressure piece using e.g., the detachable clip connection would facilitate not only easy mounting of the saddle portion w.r.t. the pressure piece, but also would facilitate indicating a relative rotational or radial position of the magnet w.r.t to sensor(s) and/or electronic switches to an assembly line employee. Thus, during assembly, it is easier to determine which part of the brake valve will receive e.g., the magnet support and that particular part is slid down along a groove or cavity formed with the help of e.g., other elements of the brake valve.

Furthermore, before inserting the pressure piece in the housing, in particular in a cavity inside the housing, the magnet support comprising the magnet is assembled with the pressure piece by e.g., using the detachable clip connection. The magnet support and/or the saddle portion may be flexible to provide the joint with the pressure piece. The pressure piece may comprise a circle-cylindrical pressure piston and a circle-cylindrical pressure plate, wherein the pressure plate has a greater diameter than the pressure piston. The pressure piston and the pressure plate may be part of a single part/component. The magnet support may be assembled to the pressure piece at the pressure plate. The magnet support may be at least partially positioned in a magnet cavity of the housing, wherein, preferably, the magnet cavity is connected to or part of the cavity. Preferably, the clip connection allows an at least partial rotation of the magnet support around the valve axis when the magnet support is mounted to the pressure piece, wherein, preferably, a rotation of the magnet support is also possible inside the housing. Preferably the housing comprises a plastic cover that is assembled in an aluminum housing. The plastic cover serves as guiding for the magnet support and the pressure piece and allows small free play rotation around the valve axis.

The brake valve according to the invention is thus a brake valve easy and fast to mount. No tools or additional fastening elements are required for assembly of the pressure piece and the magnet support. The number of components for a position sensor are reduced. Moreover, the clip connection provides a safe connection between the pressure piece and the magnet support, so it can be ensured that by detecting the position of the magnet, the position of the pressure piece can also be inferred. Further, the clip connection provides a good resistance for different temperature ranges and vibration profiles. Furthermore, a rotatable magnet support may compensate tolerances of the pressure piece, of the magnet support, of the magnet, and/or of the housing.

In a first preferred embodiment, the magnet support is mountable to the pressure piece radially i.e. from a substantial radial direction with respect to the valve axis before inserting the pressure piece into the housing. Alternatively or additionally, the magnet support is mountable to the pressure piece axially with respect to the valve axis. This allows a simple and precise positioning of the magnet support on the pressure piece.

In a preferred embodiment, the pressure piece comprises a support portion, in particular a support groove and/or a support shoulder. The saddle portion of the magnet support preferably rest against the support portion of the pressure piece in the assembled state. The support portion forms a one-sided or two-sided axial bearing for the magnet support and ensures the correct axial positioning of the magnet relatively to the pressure piece and/or to the stationary part of the position sensor.

In a preferred embodiment, the saddle portion extends over a circumferential angle of more than 180°, more than 200°, more than 220°, more than 240°, more than 260°, more than 280° or more than 300°, and/or less than 360°, less than 340°, less than 320°, less than 300°, less than 280°, less than 260° or less than 240°. Preferably, the saddle portion extends over a circumferential angle in a range from 200° to 240°, and more preferably the saddle portion extends over a circumferential angle about 200°. The saddle portion preferably overlaps the pressure piece in the assembled state. The saddle portion may have a radial saddle opening for inserting the pressure piece outside the circumferential angle of the saddle portion. The radial saddle opening preferably has a radial width that is less than the diameter of the pressure piece, preferably the radial width is in a range of 1.00 mm to 2.00 mm smaller than the diameter of the pressure piece. Thus, the magnet support can be easily slide onto the pressure piece. The saddle portion flexes and is forced radially outward during the assembly due to the greater diameter of the pressure piece. After passing the bend point the saddle portion surrounds the pressure piece. The magnet holder may be configured in such a way that the saddle portion fits loosely or tensioned at the pressure piece. A loose configuration allows a rotation of the magnet support to prevent clamping of the magnet support inside the housing. A tensioned configuration ensures the proper position of the magnet relatively to the stationary part of the position sensor.

In a further preferred embodiment, the saddle portion of the magnet support is partially ring-shaped. The saddle portion is preferably ring-shaped at the circumferential angle of the saddle portion. The ring-shaped design enables a good fit on the pressure piece, an easy assembly and an easy manufacturing.

Preferably, the saddle portion comprises at least a first saddle bar and at least a second saddle bar. This ensures that the magnet holder is fixed on both sides of the pressure piece and the clip connection is equally loaded on both sides of the pressure piece.

In a further preferred embodiment, the magnet support comprises a magnet holder for holding the magnet, wherein the saddle portion is arranged radially between the valve axis and the magnet holder. The magnet holder may be arranged on the side of the saddle portion facing away from the radial saddle opening. This way, the position of the pressure piece is well detectable with a position sensor positioned spaced from the valve axis.

Preferably, the magnet holder and the saddle portion are formed as one part, so an easy assembly is ensured. Alternatively, the magnet holder and the saddle portion are joined by an over molding process, by an ultrasonic welding process, by a pushing process, by a snap fit joint, by gluing, and/or by any other suitable joining process.

In a further preferred embodiment, the magnet support, in particular the saddle portion, comprises at least a rib preferably raised parallel to the valve axis to prevent the pressure piece and/or the magnet support from rattling during the movement along the valve axis. The rib effects a frictional connection between the magnet support and the pressure piece and effects an axial set of the magnet support relative to the pressure piece. Preferably, the pressure piece comprises a rest portion raised parallel to the valve axis, in particular a rest groove. The rest portion may be arranged at the pressure plate. The rest portion may be arranged in the support portion, in particular at a support shoulder. The rest portion may be extended radially with respect to the valve axis. The at least a rib engages with the rest portion in the assembled state to prevent the pressure piece and/or the magnet support from rattling during the movement of the pressure piece. This ensures a steady movement of the magnet with the pressure piece.

Preferably, the magnet support comprises a ring-shaped wall extending parallel to the valve axis to provide a guide for the pressure piece and/or for the magnet support and/or for the magnet. In the assembled state the wall engages with the housing and/or rest against the housing. The ring width of the wall may be smaller than the ring width of the saddle portion. The wall may extend to the pressure piston in the assembled state. The wall may extend over a circumferential angle of more than 30°, more than 60°, more than 90°, more than 120°, more than 150°, more than 180° or more than 210°, and/or less than 360°, less than 330°, less than 300°, less than 270°, less than 240°, less than 210° or less than 180°, preferably the wall extends over a circumferential angle in a range from 60° to 240°, more preferably the wall extends over a circumferential angle of 180°. The wall may have two circumferential ends and a height that is parallel to the valve axis. The height of the wall may decrease towards the circumferential ends.

In a further preferred embodiment, the magnet is overmolded to prevent direct contact between the magnet and the housing in the assembled state. The magnet is movably positioned in the cavity of the housing and may therefore be subject to abrasion. Due to the coating, the magnet is more durable and the friction between the magnet and the housing can be reduced.

Preferably, the magnet is overmolded with a material with very good sliding and abrasion resistance properties, espacially comprising polyoxymethylene and/or polyamide and/or polycaprolactam and/or glass fibres, wherein, preferably, the material comprises 50% or more, 60% or more, 70% or more, 80% or more, 90% or more, 95% or 98% or more polyoxymethylene and/or wherein, preferably, the material comprises 1% or more, 2% or more, 5% or more, 7% or more, 10% or more, 12% or more, or 15% or more, or 20% or more glass fibres.

Preferably, the material comprises about 80% polyoxymethylene and about 20% glass fibres. The material is accompanied by the advantage that a low temperature is required during overmolding, so that the magnet is not negative affected in terms of magnetization.

Preferably, the magnet support, in particular the saddle portion and/or the magnet holder and/or the rib and/or the wall, is made of a material comprising polyoxymethylene and/or glass fibres, wherein, preferably, the material comprises 50% or more, 60% or more, 70% or more, 80% or more, 90% or more, 95% or more, or 98% or more polyoxymethylene and/or wherein, preferably, the material comprises 1% or more, 2% or more, 5% or more, 7% or more, 10% or more, 12% or more, or 15% or more glass fibres. Preferably, the material comprises about 90% polyoxymethylene and about 10% glass fibres. The magnet support serves as a sliding guide inside the housing. The material has a low friction value and a low abrasion tendency. Moreover, the material has a good ratio between strength and flexibility. It is therefore well suited for the clip connection.

In a further preferred embodiment, the magnet is fomed as a neodymium magnet. Alternatively, the magnet may be designed as an aluminum magnet. A neodymium magnet is stronger compared to an aluminum magnet. Further, a measuring system with a neodymium magnet does require less or no setup and less or no calibration before the first brake actuation. The magnet may be formed either pin-shaped or box-shaped, wherein the pin-shaped magnet is extending parallel to the valve axis.

In a preferred embodiment, the brake valve of one or more of the above mentioned embodiments comprises a position sensor either directly or indirectly attached to the brake valve, wherein the magnet forms a moving part of a position sensor for detecting the position of the pressure piece; and wherein a stationary part of the position sensor is arranged in or at the housing and the moving part of the position sensor is arranged radially between the valve axis and the stationary part of the position sensor. In a specific embodiment, a stationary part of the position sensor is arranged within (as opposed to "in" or "at") the housing, wherein the moving part of the position sensor, the magnet, is arranged radially between the valve axis and the stationary part of the position sensor. This way, the position of the pressure piece is well detectable with the stationary part of the position sensor positioned away from the valve axis.

Preferably, the stationary part of the position sensor comprises a reed switch to wake-up the position sensor from an off-state and at least a first hall sensor to detect the degree of the brake actuation by sensing the position of the moving part of the position sensor. The at least a first hall sensor does not sense in an off-state of the vehicle. Therefore, the position sensor comprises a reed switch affected by the movement of the magnet and switching the hall sensor from the off-state to the on-state. Alternatively or additionally, a pressure sensor may be provided as the stationary part of the position sensor to either wake-up the position sensor or to detect the position of the pressure piece.

In a further preferred embodiment, the stationary part of the position sensor comprises at least a first hall sensor and at least a second hall sensor, wherein the first hall sensor and the second hall sensor are axially spaced apart with respect to the valve axis. The second hall sensor may be configured to detect the degree of the brake actuation as well. The first hall sensor and/or the second hall sensor and/or the reed switch may be positioned on a line parallel to the valve axis and/or may have a same radial offset to the valve axis. Thus, a compensation of environmental influences is possible since they affect both or all hall sensors equally.

In accordance with yet another embodiment of the present invention, the brake valve of one or more of the above embodiments comprises at least one reed swtich and at least one hall sensor, wherein there is only one magnet provided within the housing, and wherein the magnet is for either simultaneously or consecutively activating the at least one reed switch and the at least one hall sensor. The brake valve of the present embodiment includes the technical advantage of using a single magnet for activating two different electronic position determining devices i.e., the at least one reed switch and the at least one hall sensor.

In accordance with still another embodiment or in combination with the embodiment of the previous paragraph, the at least one hall sensor is a 3D hall sensor. There a variety of technical advantages in using the 3D hall sensors in association with the brake valve of the present invention including providing relatively more accurate information regarding the relative position of the pressure piece i.e., both angular rotary and linear positions of the pressure piece in relation the position of the 3D hall sensor. Furthermore, the 3D hall sensors, for instance, are capable of providing pulse width modulated (PWM) outputs. In accordance with an embodiment, the at least one 3D hall sensor is configured to operate in the environment of the temperature range of approximately - 40 degrees to + 160 degrees Celsius. Such a wide temperature range for covers the operating conditions of vehicles and the enviornmental factors the brake valve(s) of the present invention is/are exposed to.

According to a second aspect of the invention, the above stated object is solved by a brake system for a vehicle, comprising a brake valve according to any of the aforementioned preferred ambodiments of a brake valve according to the first aspect of the invention.

According to a third aspect of the invention, the above stated object is solved by a vehicle, in particular a commercial vehicle, comprising the aforementioned brake system .

According to a fourth aspect of the invention, the above stated object is solved by a manufacturing method to overmold a magnet comprising the following steps. First step, the magnet gets magnetised. Second step, the magnet gets overmolded by a material comprising polyoxymethylene and/or glass fibres, wherein, preferably, the material comprises 50% or more, 60% or more, 70% or more, 80% or more, 90% or more, 95% or more, or 98% or more polyoxymethylene and/or wherein, preferably, the material comprises 1% or more, 2% or more, 5% or more, 7% or more, 10% or more, 12% or more, or 15% or more glass fibres. Preferably, the material comprises about 90% polyoxymethylene and about 10% glass fibres.

Preferably, the manufacturing method comprises the following steps, wherein these steps may be carried out once or several times. Third step, the magnetic force of the overmolded magnet gets tested. Forth step, the tested magnetic force gets compared with a minimum limit value of a magnetic value. If necessary, the magnet gets magnetised again.

It should be understood that brake valve according to the first aspect of the invention, the brake system according to the second aspect of the invention, the vehicle according to the third aspect of the invention and the method according to the fourth aspect of the invention preferably have similar or equal aspects, in particular as they are described in the dependent claims. Thus, reference is made to the above description of the brake valve according to the first aspect of the invention.

For a more complete understanding of the invention, the invention will now be described in detail with reference to the accompanying drawings. The detailed description will illustrate and describe what is considered as preferred embodiments of the invention.

In the accompanying drawings:
- Fig. 1: shows a schematic layout of a vehicle having a brake system comprising a brake valve;
- Fig. 2: shows a cut view of a brake valve with a stick-shaped magnet;
- Fig. 2a: shows a perspective view of the pressure piece and the magnet support according to Fig. 2;
- Fig. 3: shows a cut view of a brake valve with a box-shaped magnet;
- Fig. 3a: shows a perspective view of the pressure piece and the magnet support according to Fig. 3;
- Fig. 3b: shows a side view of the brake valve according to Fig. 3;
- Fig. 3c: shows a cut view of the brake valve according to cut A-A of Fig. 3a;
- Fig. 3d: shows a cut view of the brake valve according to cut B-B of Fig. 3a;
- Fig. 4: shows a top view of the pressure piece and the magnet support according to Fig. 3;
- Fig. 5: shows a perspective view of the assembly of the pressure piece and the magnet support according to Fig. 4;
- Fig. 5a: shows a perspective view of the assembly of the pressure piece and the magnet support according to Fig. 4;
- Fig. 5b: shows a perspective view of the assembly of the pressure piece and the magnet support according to Fig. 4;
- Fig. 5c: shows a perspective view of the assembly of the pressure piece and the magnet support according to Fig. 4;
- Fig. 6: shows a perspective view of the magnet support according to Fig. 3;
- Fig. 6a: shows a detail of Fig. 6;
- Fig. 6b: shows a side view of the magnet support according to Fig. 6;
- Fig. 6c: shows a rear view of the magnet support according to Fig. 6;
- Fig. 7: shows a perspective view of the brake valve according to Fig.3;

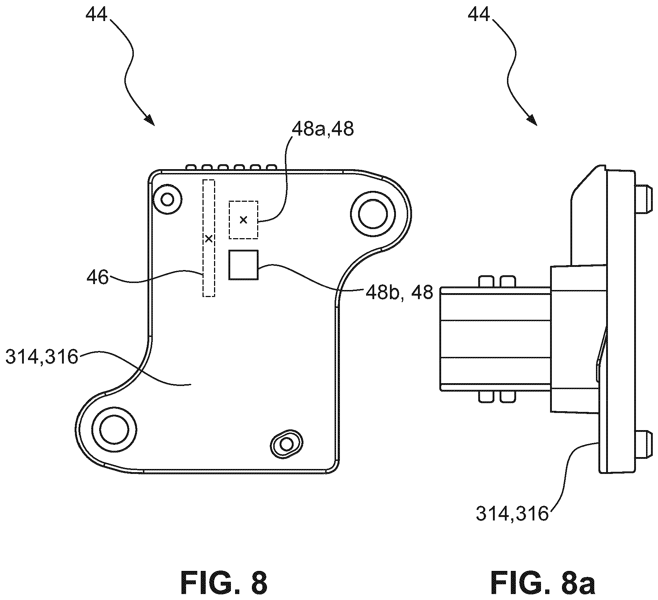

- Fig. 8: shows a stationary part of the position sensor of the brake valve according to Fig. 2 and 3;
- Fig. 8a: shows a side view of stationary part according Fig. 8;
- Fig. 9: shows a diagram of the position sensor of the brake valve according to Fig. 2 and 3; and
- Fig. 10: shows a perspective view of the magnet support with manufacturing marks for injection molding;
- Fig. 10a: shows a further perspective view of the magnet support with manufacturing marks for injection molding according to Fig. 10;
- Fig. 10b: shows a further perspective view of the magnet support with manufacturing marks for injection molding according to Fig. 10; and
- Fig. 11: shows a manufacturing method to overmold a magnet.

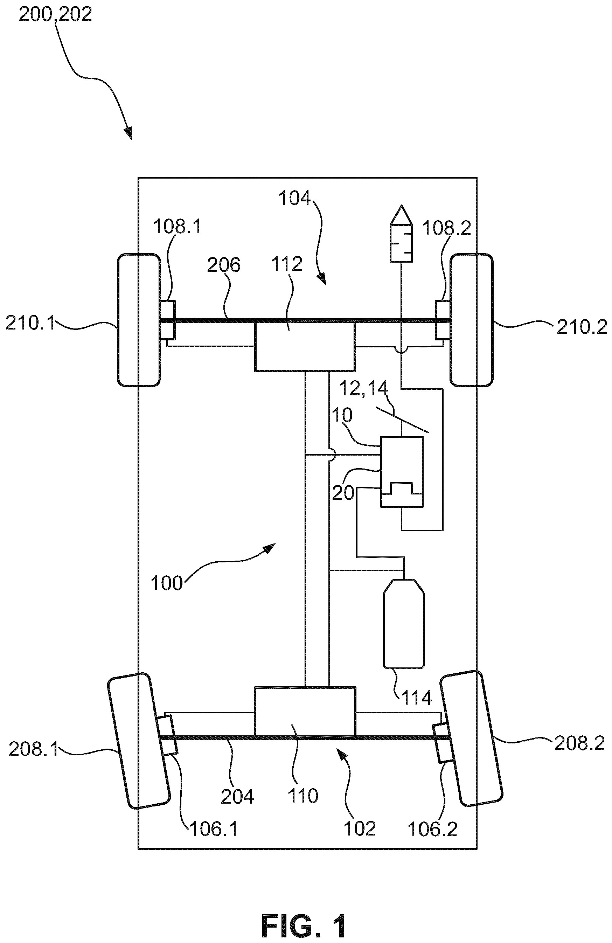

According to Fig. 1, a vehicle 200, in particular a commercial vehicle 202, comprises a front axle 204 and a rear axle 206. For braking front wheels 208.1, 208.2 of front axle 204 and rear wheels 210.1, 210.2 of rear axle 206 vehicle 200 comprises a brake system 100 having a front axle brake circuit 102 for braking front wheels 208.1, 208.2 and a rear axle brake circuit 104 for braking rear wheels 210.1, 210.2. For braking wheels 208.1, 208.2, 210.1, 210.2 brake system 100 comprises front axle brake actuators 106.1, 106.2 and rear axle brake actuators 108.1, 108.2. Front axle brake actuators 106.1, 106.2 are connected to a front axle brake modulator 110 while rear axle brake actuators 108.1, 108.2 are connected to a rear axle brake modulator 112. For providing compressed air at a supply pressure pS, brake system 100 comprises a compressed air supply 114. Of course, it may comprise more than one air supply 114.

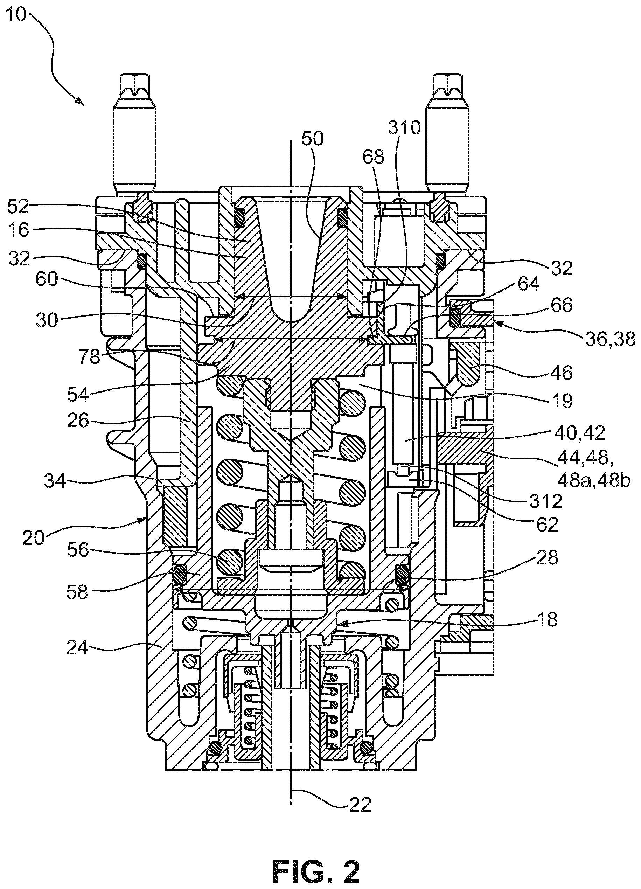

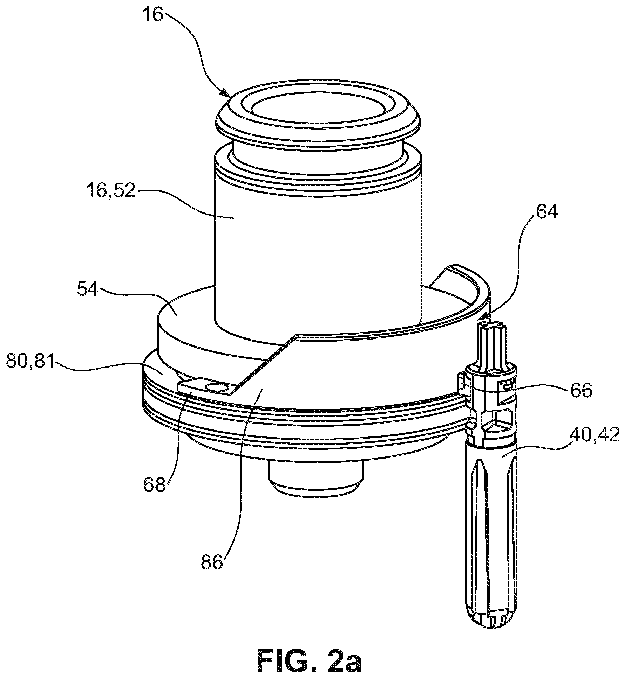

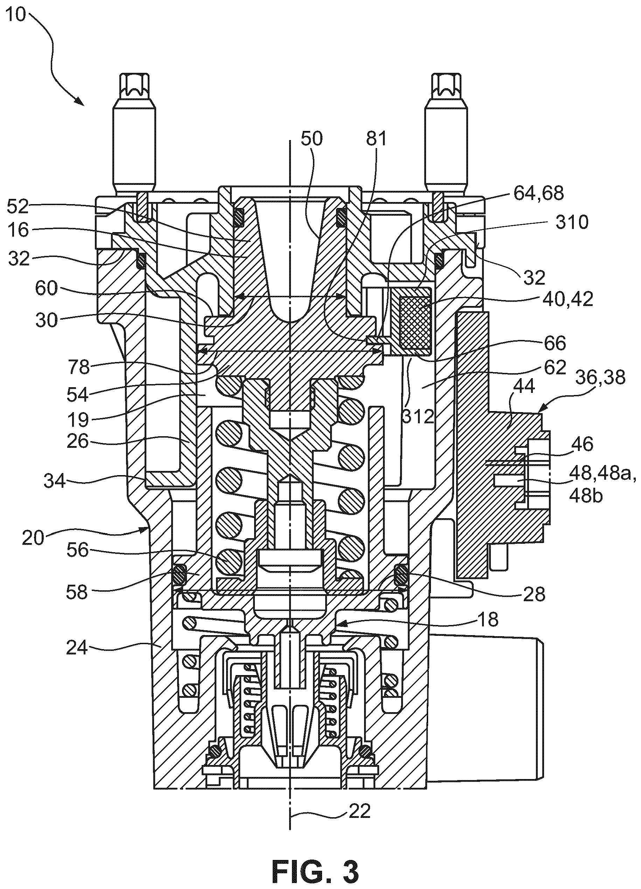

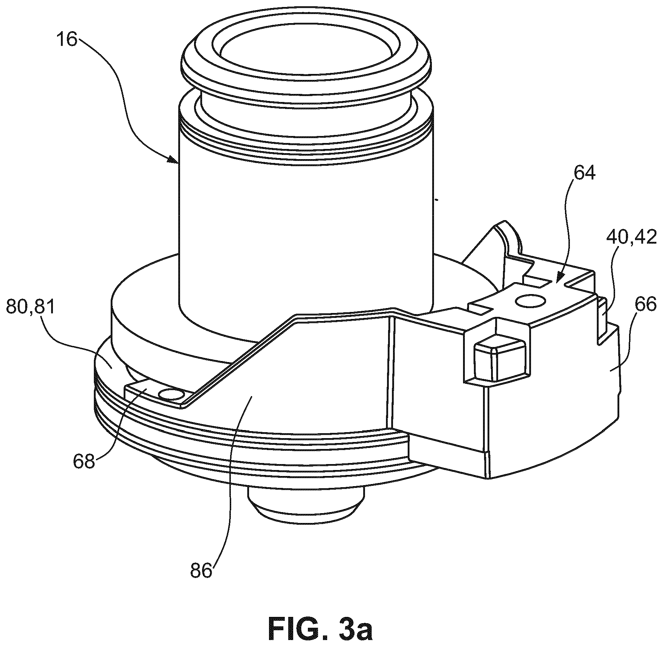

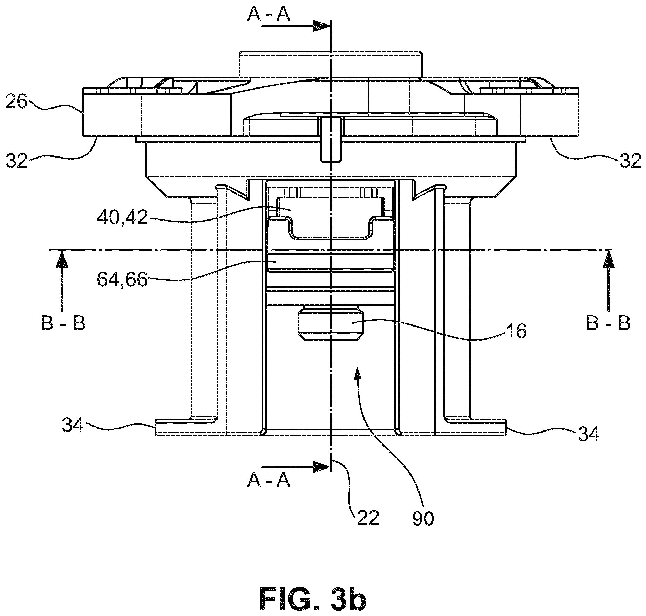

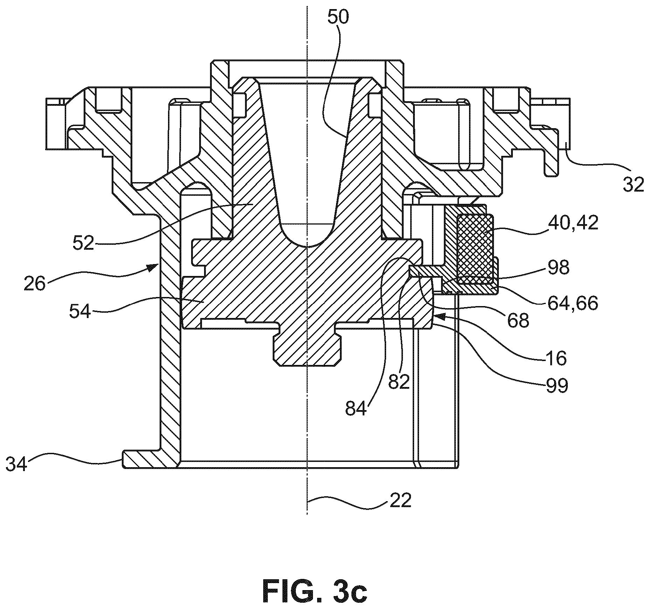

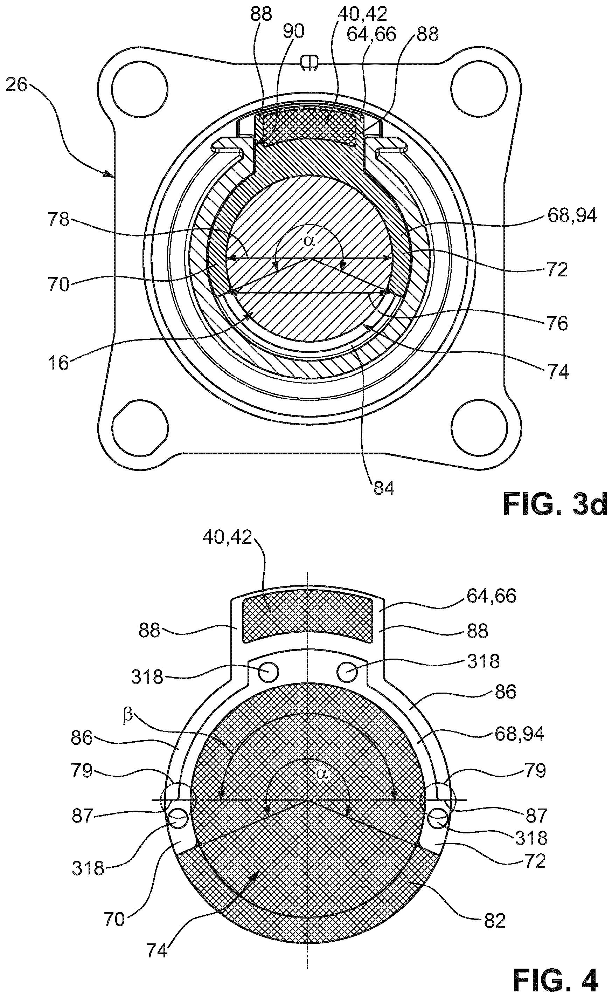

In order to brake vehicle 200 a brake pressure pB needs to be supplied to front axle brake modulator 110 and rear axle brake modulator 112. For providing brake pressure pB, brake system 100 comprises a brake valve 10. Upon actuation by a user, brake valve 10 provides a brake pressure pB corresponding to the degree of actuation provided by the user. To allow an actuation, brake valve 10 comprises an actuation element 12, which is formed as a brake pedal 14 in this embodiment. If brake pedal 14 is only slightly actuated, a low brake pressure pB is supplied to brake modulators 110, 112, while a high brake pressure pB is supplied to brake modulators 110, 112 when brake pedal 14 is fully actuated. According to Fig. 2 and 3, a pressure piece 16 is provided to apply the force to at least a pneumatic valve system 18 caused by actuation element 12.

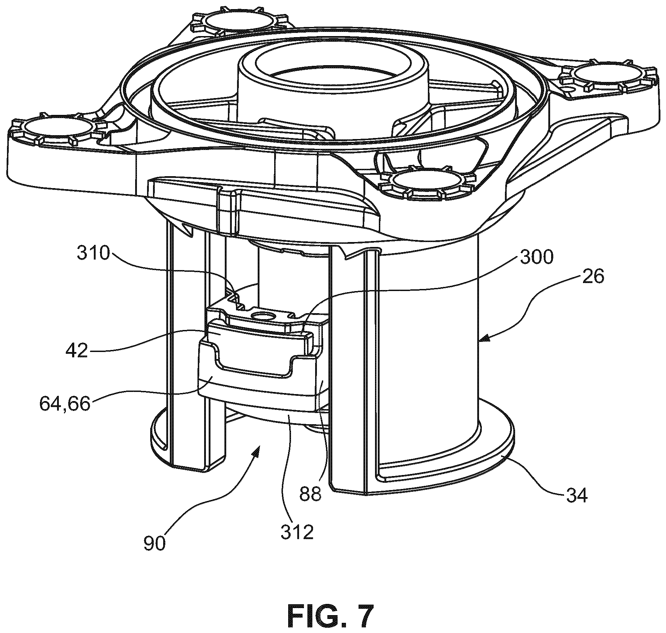

Pressure piece 16 is arranged in a cavity 19 of a housing 20 and slidable along a valve axis 22 between a neutral position and an actuation position. The degree of actuation is dependent on the position of pressure piece 16, wherein in the neutral position no brake demand is present, and wherein in the actuation position a brake demand is present. The closer pressure piece 16 is to the fully actuated position, the higher the brake demand. In Fig. 7, pressure piece 16 is shown in an actuation position.

Housing 20 comprises a first hollow housing part 24 and a second hollow housing part 26. Second hollow housing part 26 serves as cover for housing 20 and is assembled by four screws to housing 20. Pneumatic valve system 18 is mounted in first housing part 24. Pressure piece 16 is arranged in second housing part 26, wherein second housing part 26 is mounted into first housing part 24 and serves as a cap on top of first housing part 24. An inner diameter 28 of first housing part 24 is greater than an inner diameter 30 of second hosing part 26.

According to Figs. 2, 3 and 3b, second housing part 26 comprises an upper mounting surface 32 and a lateral mounting surface 34 resting against first housing part 24, wherein upper mounting surface 32 is extending perpendicular to valve axis 22 and wherein lateral mounting surface 34 is extending parallel to valve axis 22. Mounting faces 32, 34 ensure a correct positioning of second housing part 26 inside first housing part 24. Such mounting faces 32, 34 are used for assembly simplification according to Poka-Yoke measures.

Brake valve 10 comprises a pneumatic brake signal transmitter according to valve system 18 and an electric brake signal transmitter for controlling brake modulators 110, 112. The electric brake signal transmitter is described in detail below.

According to Fig. 2 and 3, brake modulators 110, 112 may be approached by the pneumatic brake signal transmitter or by the electric brake signal transmitter. For the electric brake signal a degree of actuation has to be detected. The degree of actuation depends on the position of pressure piece 16. A measuring system 36 with at least a position sensor 38 is provided to determine the position of pressure piece 16. Position sensor 38 comprises a moving part 40, formed as a magnet 42, and a stationary part 44, formed as a reed switch 46 and two hall sensors 48. Moving part 40 of position sensor 38 is arranged at the pressure piece 16. Stationary part 44 of position sensor 38 is arranged at or in housing 20, in particular at or in first housing part 24. Moving part 40 of position sensor 38 is arranged between valve axis 22 and stationary part 44 of position sensor 38. Magnet 42 is formed as a neodymium magnet, wherein setup time during assembly is saved in comparison to a magnet formed as a aluminum magnet.

Pressure piece 16 comprises a conical cavity 50 facing brake pedal 12 for connecting brake pedal 12 with pressure piece 16. Further, pressure piece 16 comprises a pressure piston 52 extending along valve axis 22 and a pressure plate 54 extending perpendicular to valve axis 22. Pressure plate 54 is arranged adjacent to a spring 56 urging the pressure piece 16 in the neutral position. Brake pedal 14 must be pushed against graduation spring 56 to execute a brake demand, wherein graduation spring 56 provides a graduation pressure charcteristic. Spring 56 is arranged inside a piston 58, wherein piston 58 is arranged inside first housing part 24. Pressure plate 54 comprises a stop surface 60 on the top engaging with second housing part 26 in the neutral position and thus limiting the movement of pressure piece 16 towards actuation element 14 and away from spring 56.

The positioning of magnet 42 relatively to pressure piece 16 is important due to the position detection of the pressure piece 16 using magnet 42. Hence, pressure piece 16 and magnet 42 have to move simultaneously along valve axis 22, whereby clamping of pressure piece 16 or magnet 42 has to be prevented. From prior art it is known that a magnet is positioned between a cavity of the housing and a recess of the pressure piece. This is accompanied by a complex assembly of the magnet at the pressure piece, wherein the magnet could get clamped between the pressure piece and the housing.

According to the Figs. 2, 3 and 3d, magnet 42 is arranged in a magnet cavity 62 formed by first housing part 24 and by second housing part 26. Magnet cavity 62 is connected with cavity 19. According to the invention, magnet 42 is fixed at the pressure piece 16 by a magnet support 64. Magnet support 64 comprises a magnet holder 66 to hold magnet 42 and a saddle portion 68 to fix magnet support 64 to pressure piece 16. Saddle portion 68 provides a clip connection to pressure piece 16 for fast assembly and a safe fixation to pressure piece 16.

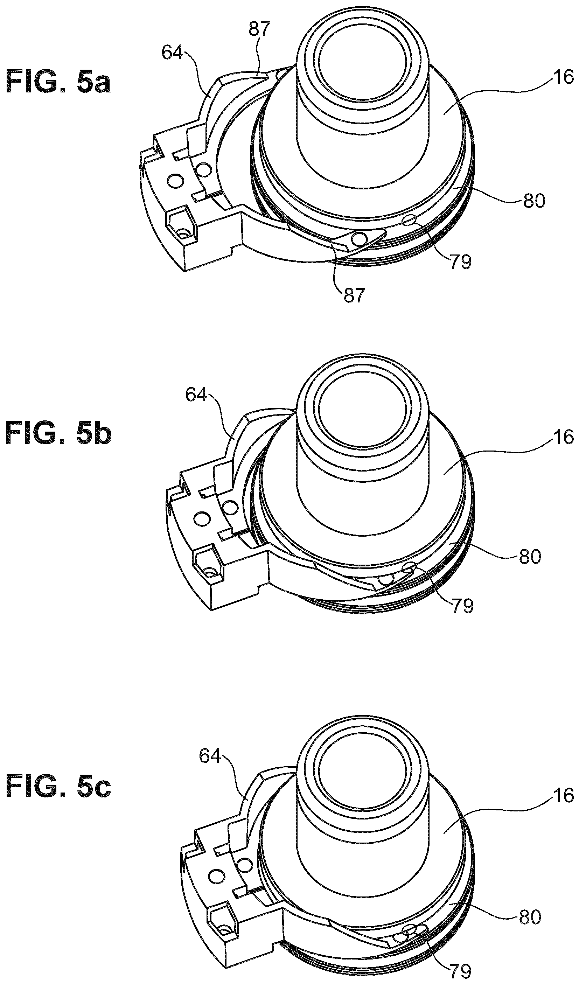

According to Fig. 3d and 4, saddle portion 68 is ring-shaped and comprises a first saddle bar 70 and a second saddle bar 72. Saddle portion 68 extends over a circumferential angle α of more than 180°, more than 200°, more than 220°, more than 240°, more than 260°, more than 280° or more than 300°, and/or less than 360°, less than 340°, less than 320°, less than 300°, less than 280°, less than 260° or less than 240°. Preferably, the saddle portion 68 extends over a circumferential angle α in a range between 200° and 240° and more preferably the saddle portion 68 extends over a circumferential angle α about 200°. Saddle portion 68 preferably overlaps the pressure piece 16 in the assembled state. Saddle portion 68 has a radial saddle opening 74 outside the circumferential angle α for inserting the pressure piece 16 into magnet support 64. Radial saddle opening 74 preferably has a radial width 76 that is less than a diameter 78 of pressure piece 16, preferably radial width 76 is in a range between 1.00 mm and 2.00 mm smaller than diameter 78 of pressure piece 16. Thus, magnet support 64 can be easily slide onto the pressure piece 16. In Fig. 5a, 5b and 5c an assembly process of pressure plate 16 and magnet support 64 is shown. Pressure piece 16 is positioned at radial saddle opening 74 and then both are pushed towards each other. Thereby, saddle portion 68 flexes and is forced radially outward during the assembly due to greater diameter 78 of pressure piece 16. After passing a bend point 79 saddle portion 68 partially surrounds pressure piece 16. In assembly state, saddle portion 68 rest against pressure piece 16 in the circumferential angle α. Magnet support 64 may be configured in such a way that saddle portion 68 fits loosely or tensioned at pressure piece 16. A loose configuration allows a rotation of magnet support 64 to prevent clamping of magnet support 64 inside housing 20. A tensioned configuration ensures the proper position of the magnet 42 relatively to stationary part 44 of position sensor 38.

Magnet support 64, in particular the saddle portion 68 and/or the magnet holder 66 and/or the rib 92 and/or the wall 86, is made of a material comprising polyoxymethylene and/or polyamide and/or polycaprolactam and/or glass fibres, wherein, preferably, the material comprises more than 50%, more than 60%, more than 70%, more than 80%, more than 90%, more than 95% or more than 98% polyoxymethylene and/or wherein, preferably, the material comprises more than 1%, more than 2%, more than 5%, more than 7%, more than 10%, more than 12% or more than 15% glass fibres. Preferably, the material comprises about 90% polyoxymethylene and about 10% glass fibres. The material has a good ratio between strength and flexibility. It is therefore well suited for the clip connection between the saddle portion 68 and pressure piece 16.

Pressure piece 16 provides a support portion 80 at pressure plate 54, which is formed as a support groove 81, to receive saddle portion 68. Support groove 81 is formed circumferentially perpendicular to valve axis 22 and comprises a first support shoulder 82 and a second support shoulder 84, wherein first support shoulder 82 is arranged below second support shoulder 84 and wherein first support shoulder 82 has a greater diameter than second support shoulder 84.

According to Fig. 2 to 3a, magnet holder 66 receives and secures magnet 42 relatively to pressure piece 16. Magnet holder 66 and magnet 42 are joined by an overmolding process. Saddle portion 68 is arranged between magnet holder 66 and valve axis 22 in the assembled state. Magnet 42 is formed pin-shaped according to Figs. 2 and 2a or box-shaped according to Figs. 3 to 3d, wherein magnet 42 may be joined to magnet holder 66 by a further saddle portion. Magnet 42 is protected against abrasion by magnet holder 66. Magnet 42 may be overmolded to further improve durability of magnet 42. Thus, it is ensured that no direct contact occurs between housing 20 and magnet 42.

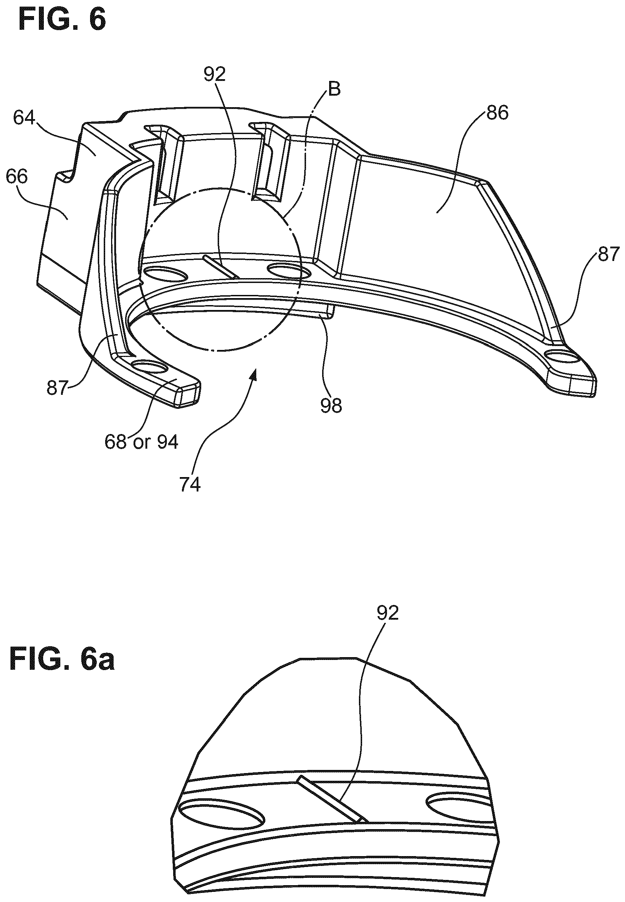

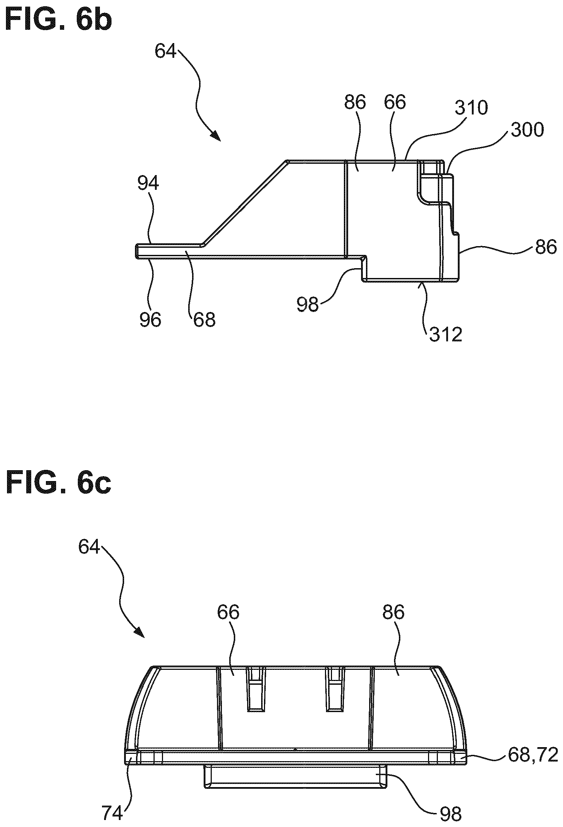

According to Fig. 6b, beginning at saddle portion 68, a wall 86 extends upwards parallel to the valve axis 22. Wall 86 is formed ring-shaped. Wall 86 is preferably provided in the area of saddle portion 68, in particular in the area of the circumferential angle α of saddle portion 68, and/or preferably in the area of the magnet holder 66. Wall 86 may extend over a circumferential angle β of more than 30°, more than 60°, more than 90°, more than 120°, more than 150°, more than 180° or more than 210°, and/or less than 360°, less than 330°, less than 300°, less than 270°, less than 240°, less than 210° or less than 180°, preferably the wall 86 extends over a circumferential angle β in a range between 60° and 240°, more preferably the wall 86 extends over a circumferential angle β of 180°. The ring width of wall 86 is smaller than the ring width of the saddle portion 68, in particular the ration of the ring width of wall 86 and of the ring width of saddle portion 68 may be in range between 1:1,5 and 1:3, preferably at 1:2. Wall 86 may have two circumferential ends 87 and a height that is parallel to the valve axis. The height of the wall 86 may decrease towards the circumferential ends 87.

Moreover, wall 86 covers magnet 42 laterally, so radially with respect to the valve axis 22, on the front facing the pressure piece 16 and on the back facing first housing part 24 according to Fig. 3d and 4. Moreover, wall 86 is provided for guiding magnet support 64 inside the housing 20, wherein in fact wall 86 on saddle portion 68 and lateral wall portion 88 on magnet holder 66 are provided for guiding the magnet support 64 in second housing part 26 and wherein wall 86 on the back of the magnet 42 is provided for guiding the magnet support 64 in first housing part 24.

Magnet 42 and/or wall 86 is overmolded with a material comprising polyoxymethylene and glass fibres, wherein preferably the material comprises in this embodiment 90% polyoxymethylene and 10%glass fibres. The material is accompanied by the advantage that a low temperature is required during overmolding, so the magnet is not negative affected in terms of magnetization. Further, the material has a low friction value, so the material is well suited for use as a guide.

To limit the rotation of magnet support 64, second housing part 26 has a guide recess 90 extending parallel to valve axis 22 according to Fig. 7. Magnet support 64 is arranged on pressure piece 16 in such a way that magnet holder 66 engages in guide recess 90 and can thus engage with first housing part 24 according to Fig. 3. Guide recess 90 limits the rotation of the magnet support to 5°, in particular to 2° and preferably to 1°. Thus, magnet support 64 has sufficient rotational clearance so that no clamping occurs but magnet 42 is positioned properly.

According to Fig. 6 and 6a, magnet support 64 has a rib 92 raised parallel to valve axis 22. Rib 92 is arranged on saddle portion 68 in the area of magnet holder 66 on an upper side 94 and/or on a lower side 96 of saddle portion 68. In the assembled state rib 92 interacts with pressure piece 16, in particular with first support shoulder 82 and/or second support shoulder 84, in such a way that rattling is reduced or prevented. Rib 92 has a height parallel to the valve axis of at least 0.05 mm and preferably between 0.1 mm and 0.15 mm. Saddle portion 68 and rib 92 have in sum a height parallel to valve axis 22 that is a bit greater than a height of support portion 80. Rib 92 effects a good axial fit of saddle portion 68 in support groove 81.

Furthermore, according to Fig. 3c and 6b magnet holder 66 has an additional contact portion 98 next to saddle portion 68 which extends axially downwards from saddle portion 68 with respect to valve axis 22. For instance, in an exemplary embodiment, in the assembled state, contact portion 98 can be set up in such a way that contact portion 98 rests against a circumferential surface 99 of pressure piece 16 arranged below support portion 80. In another exemplary alternative embodiment, a gap is provided between contact portion 98 and circumferential surface 99.

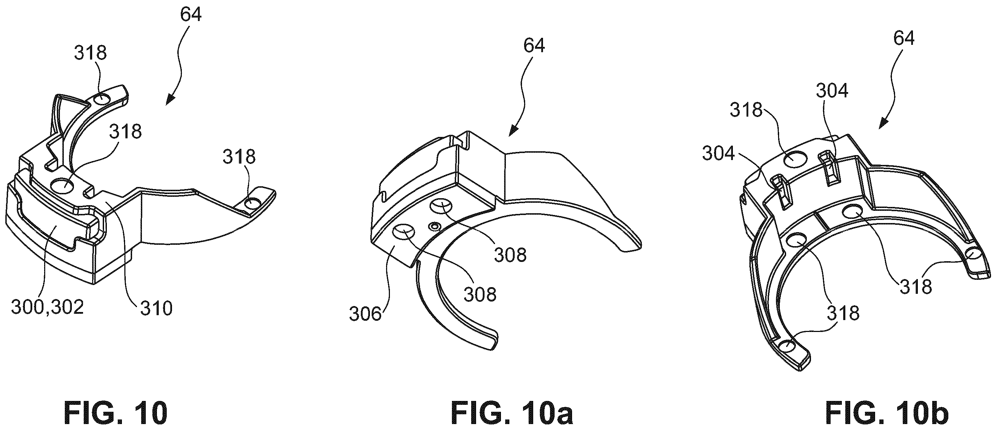

The embodiment shown in Figs. 10, 10a and 10b shows a magnet support 64 manufactured by an injection molding process. Magnet 42 is clamped on a top side 300 at a clamping area 302 and at two clamping points 304 and on a bottom side 306 punctual at e.g., two clamping points 308. Besides clamping area 302 and clamping points 304, 308 magnet 42 is completely covered by mold and/or by magnet holder 66. Further, ejector pin points 318 are shown. Due to clamping area 302 and clamping points 304, 308 magnet 42 can be positioned exactly relativ to magnet support 64.

According to Figs. 2 and 3, second housing part 26 and pressure piece 16 are designed in such a way that in the neutral position magnet 42 or a top side 310 (c.f. Fig. 10) of magnet holder 66 does not come into contact with second housing part 26 and that in the fully actuated position magnet 42 or a down side 312 of magnet holder 66 does not come into contact with first housing part 24.

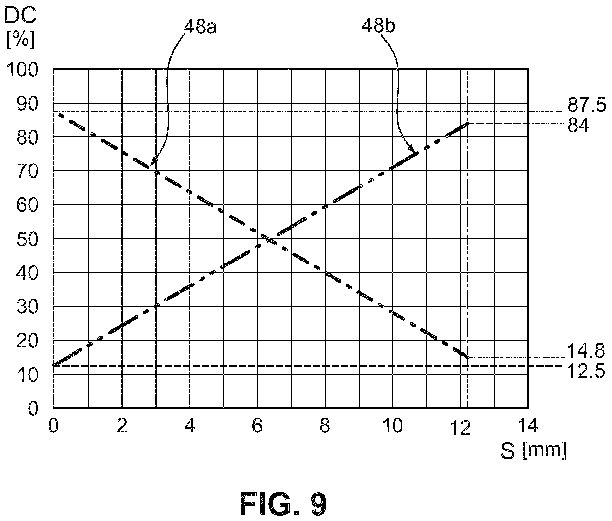

Stationary part 44 of positioning sensor 38 comprising two hall sensors 48 in one body, a first hall sensor 48a and a second hall sensor 48b, to detect reliably the degree of the actuation and a reed switch 46 to wake-up position sensor 38 from an off-state. Hall sensors 48a, 48b (at least two of them) are axially spaced apart with respect to valve axis 22 (not shown in Fig.), wherein first hall sensor 48a placed next to magnet 42 when pressure piece 26 is in the fully actuated position and wherein second hall sensor 48b is placed next to magnet 42 when pressure piece 16 is in neutral position. This results in a X sensor characteristic of hall sensors 48, 48a, 48b shown in Fig. 9. The signal output of first hall sensor 48a is increasing with the movement of the pressure piece 16 from the neutral position to the fully actuated position. The signal output of second hall sensor 48b is decreasing with the movement of the pressure piece 16 from the neutral position to the fully actuated position. Through providing two hall sensors 48, 48a, 48b it is ensured that the detected position of the pressure piece 16 is reliable. In particular, interferences that occurs can be compensated by the redundancy and the plausibility of the sensor signals generated by reed switch 46 and hall sensors 48, 48a, 48b may be evaluated due to the redundancy.

The position of hall sensors 48, 48a, 48b and reed switch 46 are shown. Measuring system 36 comprises a carrier 314 carrying hall sensors 48 and reed switch 46. Hall sensors 48 and reed switch 46 are arranged on a carrier side 316 of carrier 314 facing magnet 42 in the assembled state. In particular, at least one of hall sensors 48 is formed as a 3D-hall sensor. In an embodiment according to the present invention, all hall sensors used in conjunction with brake valve 10 are formed as 3D hall sensors.

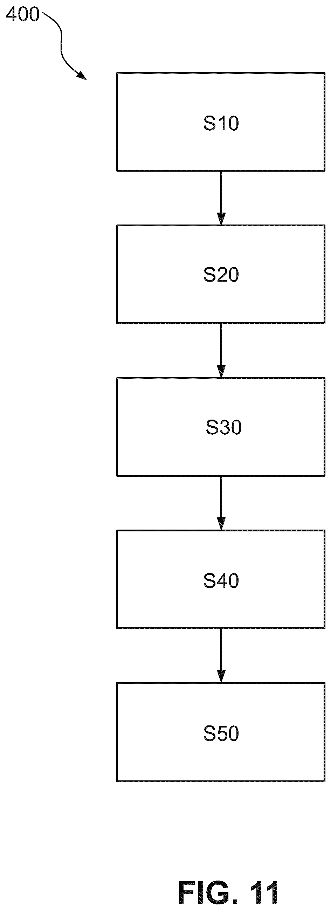

In Fig. 11, a manufacturing method 400 to overmold a magnet 42 is shown. In step 10, a suitable magnet 42 is provided, in particular a neodymium magnet. In step 20, optionally, provided magnet 42 is magnetised. In step 30, (magnetised) magnet 42 is overmolded with a material comprising 90% polyoxymethylene and 10% glass fibres. In step 40, overmolded magnet 42 is tested regarding his magnet force. In step 50, the measured magnet field strength or force is compared with a minimum limit value, e.g., in terms of an "X" value of A/m. If the measured magnet field strength is below the minimum limit value, in step 60, the magnet gets magnetised again. The steps 40, 50 and 60 can be repeated several times, preferably, when the measured magnet field strenght or force is below the minimum limit value.

### List of reference signs (part of the description)

- 10: brake valve
- 12: actuation element
- 14: brake pedal
- 16: pressure piece
- 18: pneumatic valve system
- 19: cavity
- 20: housing
- 22: valve axis
- 24: first housing part
- 26: second housing part
- 28: inner diameter of first housing part
- 30: inner diameter of second housing part
- 32: upper mounting surface of second housing part
- 34: lateral mounting surface of second housing part
- 36: measuring system
- 38: position sensor
- 40: moving part of position sensor
- 42: magnet
- 44: stationary part of position sensor
- 46: reed switch
- 48: hall sensor
- 48a: first hall sensor
- 48b: second hall sensor
- 50: conical cavity of pressure piece
- 52: pressure piston
- 54: pressure plate
- 56: spring
- 58: piston
- 60: stop surface of pressure plate
- 62: magnet cavity
- 64: magnet support
- 66: magnet holder
- 68: saddle portion
- 70: first saddle bar
- 72: second saddle bar
- 74: radial saddle opening
- 76: radial width of radial saddle opening
- 78: outer diameter of pressure piece
- 79: bend point of pressure piece
- 80: support portion
- 81: support groove
- 82: first support shoulder
- 84: second support shoulder
- 86: wall
- 87: circumferential ends of wall
- 88: lateral wall portion
- 90: guide recess
- 92: rib
- 94: upper side of saddle portion
- 96: lower side of saddle portion
- 98: contact portion of magnet holder
- 100: brake system
- 102: front axle brake circuit
- 104: rear axle brake circuit
- 106.1, 106.2: front axle brake actuators
- 108.1, 108.2: rear axle brake actuators
- 110: front axle brake modulator
- 112: rear axle brake modulator
- 114: compressed air supply
- 200: vehicle
- 202: commercial vehicle
- 204: front axle
- 206: rear axle
- 208.1, 208.2: front wheels
- 210.1, 210.2: rear wheels
- 300: top side of magnet
- 302: clamping area
- 304: clamping points
- 306: bottom side of magnet
- 308: clamping points
- 310: top side of magnet holder
- 312: down side of magnet holder
- 314: carrier
- 316: carrier side
- 318: ejector pin points
- 400: assembly method
- α: circumferential angle of saddle portion
- pB: brake pressure
- pS: supply pressure
- S10, S20, S30: steps
- S40, S50, S60: steps

## Claims

1. A brake valve (10) for providing a brake pressure (pB) to a vehicle brake system (100), preferably a vehicle brake system (100) of a commercial vehicle (202), comprising
a housing (20);
a pressure piece (16) configured to apply a force to at least a valve system (18) caused by an actuation element (12), in particular an actuable brake pedal (14) and slidably arranged in the housing (20) along a valve axis (22) between a neutral position and an actuation position;
**characterized in that** said brake valve (10) further comprises a magnet (42) being attached to the pressure piece (16) by a magnet support (64); and
wherein the magnet support (64) comprises a saddle portion (68), wherein the saddle portion (68) is detachably connected to the pressure piece (16).

2. The brake valve (10) according to claim 1, wherein the magnet support (64) is mountable to the pressure piece (16) radially with respect to the valve axis (22).

3. The brake valve (10) according to claim 1 or 2, wherein the pressure piece (16) comprises a support portion (80), in particular a support groove (81) and/or a support shoulder (82, 84), and wherein the saddle portion (68) of the magnet support (64) engages with the support portion (80) of the pressure piece (16) in the assembled state.

4. The brake valve according to claim 1, 2 or 3, wherein the saddle portion (68) extends over a circumferential angle (α) of more than 180° and/or less than 360°, wherein, preferably, the saddle portion (68) extends over a circumferential angle (α) in a range between 200° and 220°.

5. The brake valve (10) according to any of the preceding claims, wherein the saddle portion (68) is partially ring-shaped.

6. The brake valve (10) according to any of the preceding claims, wherein the saddle portion (68) comprises at least a first saddle bar (70) and at least a second saddle bar (72).

7. The brake valve (10) according to any of the preceding claims, wherein the magnet support (68) comprises a magnet holder (66) for holding the magnet (42), wherein the saddle portion (68) is arranged radially between the valve axis (22) and the magnet holder (66).

8. The brake valve (10) according to claim 7, wherein the magnet holder (66) and the saddle portion (68) are formed as one part.

9. The brake valve (10) according to claim 7, wherein the magnet holder (66) and the saddle portion (68) are joined by an overmolding process, by an ultrasonic welding process, by a pushing process, by a snap fit joint and/or by gluing.

10. The brake valve according to any of the preceding claims, wherein the saddle portion (68) comprises at least a rib (92) raised parallel to the valve axis (22) to prevent the pressure piece (16) and/or the magnet support (64) from rattling.

11. The brake valve (10) according to any of the preceding claims, wherein the magnet support (64) comprises a ring-shaped wall (86) extending parallel to the valve axis (22) to provide a guide for the pressure piece (16) and/or the magnet support (64) and/or the magnet (42).

12. The brake valve (10) according to any of the preceding claims, wherein the magnet (42) is overmolded with a material comprising polyoxymethylene and/or the magnet support (64), in particular the saddle portion (68) and/or the magnet holder (66), is made of a material comprising polyoxymethylene and/or glass fibres.

13. The brake valve (10) according to claim 12, wherein the material comprises more than 50% polyoxymethylene and/or more than 1% glass fibres, preferably about 90% polyoxymethylene and about 10% glass fibres.

14. The brake valve (10) according to any of the preceding claims, wherein the magnet (42) is formed as a neodymium magnet.

15. The brake valve (10) according to any of the preceding claims, further comprises a position sensor (38) either directly or indirectly attached to the brake valve (10), wherein the magnet (42) forms a moving part (40) of a position sensor (38) for detecting the position of the pressure piece (16); and
wherein a stationary part (44) of the position sensor (38) is arranged in or at the housing (20), wherein the moving part (40) of the position sensor (38) is arranged radially between the valve axis (22) and the stationary part (44) of the position sensor (38).

16. The brake valve (10) according to claim 15, wherein the stationary part (44) of the position sensor (38) comprises a reed switch (46) to wake-up the position sensor (38) from an off-state and at least a first hall sensor (48) to detect the degree of the brake actuation.

17. The brake valve (10) according to claim 15 or 16, wherein the stationary part (44) of the position sensor (38) comprises at least a first hall sensor (48, 48a) and a second hall sensor (48b), wherein the first and second hall sensors (48, 48a, 48b) are, preferably axially spaced apart with respect to the valve axis (22).

18. The brake valve (10) according to any one of claims 1 to 14, wherein the brake valve comprises at least one reed swtich (46) and at least one hall sensor (48, 48a, 48b), wherein the magnet (42) is the only magnet provided within the housing (20), and wherein the magnet (42) is for either simultaneously or consecutively activating the at least one reed swtich (46) and the at least one hall sensor (48, 48a, 48b).

19. The brake valve (10) according to claim 18, wherein the at least one hall sensor (48a, 48b) is a 3D hall sensor.

20. Brake system (100) for a vehicle (200), comprising a brake valve (10) according to any of the preceding claims.

21. A vehicle (200), in particular commercial vehicle (202), comprising a brake system (100) according to claim 20.

22. A manufacturing method (400) to overmold the magnet (42) of the brake valve (10) according to claim 1, the method comprising the following steps:
Providing (S10) a magnet (42), in particular a neodymium magnet;
Magnetising (S20) the magnet (42), optionally; and
Overmolding (S30) the magnet (42) with a material comprising at least 50% polyoxymethylene and at least 1% glass fibres.

23. The manufacturing method (400) of claim 22, further comprising the following steps once or several times:
Testing (S40) the magnetic force of the overmolded magnet (42);
Comparing (S50) the tested magnetic force with a minimum limit value; and if necessary
Magnetising (S60) or re-magnetising the magnet (42).

## Patentansprüche

1. Bremsventil (10) zum Bereitstellen eines Bremsdrucks (pB) an ein Fahrzeugbremssystem (100), vorzugsweise ein Fahrzeugbremssystem (100) eines Nutzfahrzeugs (202), umfassend
ein Gehäuse (20);
ein Druckstück (16), das konfiguriert ist, um eine Kraft auf mindestens ein Ventilsystem (18) auszuüben, verursacht durch ein Betätigungselement (12), insbesondere ein betätigbares Bremspedal (14), und das in dem Gehäuse (20) entlang einer Ventilachse (22) zwischen einer neutralen Position und einer Betätigungsposition gleitbar angeordnet ist;
**dadurch gekennzeichnet, dass** das Bremsventil (10) ferner einen Magnet (42), der an dem Druckstück (16) durch einen Magnetträger (64) angebracht ist, umfasst; und
wobei der Magnetträger (64) einen Sattelabschnitt (68) umfasst, wobei der Sattelabschnitt (68) mit dem Druckstück (16) abnehmbar verbunden ist.

2. Bremsventil (10) nach Anspruch 1, wobei der Magnetträger (64) an dem Druckstück (16) radial in Bezug auf die Ventilachse (22) montierbar ist.

3. Bremsventil (10) nach Anspruch 1 oder 2, wobei das Druckstück (16) einen Tragabschnitt (80), insbesondere eine Tragnut (81) und/oder eine Tragschulter (82, 84), umfasst, und wobei der Sattelabschnitt (68) des Magnetträgers (64) mit dem Tragabschnitt (80) des Druckstücks (16) in dem zusammengebauten Zustand in Eingriff steht.

4. Bremsventil nach Anspruch 1, 2 oder 3, wobei sich der Sattelabschnitt (68) über einen umlaufenden Winkel (α) von mehr als 180° und/oder weniger als 360° erstreckt, wobei, vorzugsweise, sich der Sattelabschnitt (68) über einen umlaufenden Winkel (α) in einem Bereich zwischen 200° und 220° erstreckt.

5. Bremsventil (10) nach einem der vorstehenden Ansprüche, wobei der Sattelabschnitt (68) teilweise ringförmig ist.

6. Bremsventil (10) nach einem der vorstehenden Ansprüche, wobei der Sattelabschnitt (68) mindestens eine erste Sattelstange (70) und mindestens eine zweite Sattelstange (72) umfasst.

7. Bremsventil (10) nach einem der vorstehenden Ansprüche, wobei der Magnetträger (68) einen Magnethalter (66) zum Halten des Magnets (42) umfasst, wobei der Sattelabschnitt (68) radial zwischen der Ventilachse (22) und dem Magnethalter (66) angeordnet ist.

8. Bremsventil (10) nach Anspruch 7, wobei der Magnethalter (66) und der Sattelabschnitt (68) als ein Teil ausgebildet sind.

9. Bremsventil (10) nach Anspruch 7, wobei der Magnethalter (66) und der Sattelabschnitt (68) durch einen Umspritzprozess, durch einen Ultraschallschweißprozess, durch einen Drückprozess, durch eine Schnappverbindung und/oder durch Kleben verbunden sind.

10. Bremsventil nach einem der vorstehenden Ansprüche, wobei der Sattelabschnitt (68) mindestens eine Rippe (92), parallel erhöht zu der Ventilachse (22), umfasst, um ein Klappern des Druckstücks (16) und/oder des Magnetträgers (64) zu verhindern.

11. Bremsventil (10) nach einem der vorstehenden Ansprüche, wobei der Magnetträger (64) eine ringförmige Wand (86) umfasst, die sich parallel zu der Ventilachse (22) erstreckt, um eine Führung für das Druckstück (16) und/oder den Magnetträger (64) und/oder den Magnet (42) bereitzustellen.

12. Bremsventil (10) nach einem der vorstehenden Ansprüche, wobei der Magnet (42) mit einem Material umspritzt ist, umfassend Polyoxymethylen und/oder den Magnetträger (64), insbesondere wobei der Sattelabschnitt (68) und/oder der Magnethalter (66) aus einem Material gefertigt sind, umfassend Polyoxymethylen und/oder Glasfasern.

13. Bremsventil (10) nach Anspruch 12, wobei das Material zu mehr als 50 % Polyoxymethylen und/oder zu mehr als 1 % Glasfasern, vorzugsweise zu etwa 90 % Polyoxymethylen und zu etwa 10 % Glasfasern, umfasst.

14. Bremsventil (10) nach einem der vorstehenden Ansprüche, wobei die Magnet (42) als ein Neodymmagnet ausgebildet ist.

15. Bremsventil (10) nach einem der vorstehenden Ansprüche, das ferner einen Positionssensor (38), der entweder direkt oder indirekt an dem Bremsventil (10) angebracht ist, umfasst, wobei der Magnet (42) einen beweglichen Teil (40) eines Positionssensors (38) zum Erfassen der Position des Druckstücks (16) ausbildet; und
wobei ein ortsfester Teil (44) des Positionssensors (38) in oder an dem Gehäuse (20) angeordnet ist, wobei der bewegliche Teil (40) des Positionssensors (38) radial zwischen der Ventilachse (22) und dem ortsfesten Teil (44) des Positionssensors (38) angeordnet ist.

16. Bremsventil (10) nach Anspruch 15, wobei der ortsfeste Teil (44) des Positionssensors (38) einen Reed-Schalter (46), um den Positionssensor (38) aus einem Aus-Zustand einzuschalten, und mindestens einen ersten Hall-Sensor (48), um den Grad der Bremsbetätigung zu erfassen, umfasst.

17. Bremsventil (10) nach Anspruch 15 oder 16, wobei der stationäre Teil (44) des Positionssensors (38) mindestens einen ersten Hall-Sensor (48, 48a) und einen zweiten Hall-Sensor (48b) umfasst, wobei der erste und der zweite Hall-Sensor (48, 48a, 48b) vorzugsweise axial in Bezug auf die Ventilachse (22) beabstandet sind.

18. Bremsventil (10) nach einem der Ansprüche 1 bis 14, wobei das Bremsventil mindestens einen Reed-Schalter (46) und mindestens einen Hall-Sensor (48, 48a, 48b) umfasst, wobei der Magnet (42) der einzige Magnet ist, der innerhalb des Gehäuses (20) bereitgestellt ist, und wobei der Magnet (42) dazu dient, den mindestens einen Reed-Schalter (46) und den mindestens einen Hall-Sensor (48, 48a, 48b) entweder gleichzeitig oder aufeinanderfolgend zu aktivieren.

19. Bremsventil (10) nach Anspruch 18, wobei der mindestens eine Hall-Sensor (48a, 48b) ein 3D-Hall-Sensor ist.

20. Bremssystem (100) für ein Fahrzeug (200), umfassend ein Bremsventil (10) nach einem der vorstehenden Ansprüche.

21. Fahrzeug (200), insbesondere ein Nutzfahrzeug (202), umfassend ein Bremssystem (100) nach Anspruch 20.

22. Herstellungsverfahren (400), um den Magnet (42) des Bremsventils (10) nach Anspruch 1 umzuspritzen, das Verfahren umfassend die folgenden Schritte:
Bereitstellen (S10) eines Magnets (42), insbesondere eines Neodymmagnets;
Magnetisieren (S20) des Magnets (42), optional; und
Umspritzen (S30) des Magnets (42) mit einem Material, umfassend zu mindestens 50 % Polyoxymethylen und zu mindestens 1 % Glasfasern.

23. Herstellungsverfahren (400) nach Anspruch 22, ferner umfassend die folgenden Schritte, ein- oder mehrmals:
Prüfen (S40) der Magnetkraft des umspritzten Magnets (42);
Vergleichen (S50) der geprüften magnetischen Kraft mit einem Minimumgrenzwert; und falls erforderlich
Magnetisieren (S60) oder erneutes Magnetisieren des Magnets (42).

## Revendications

1. Valve de freinage (10) permettant de fournir une pression de freinage (pB) à un système de freinage de véhicule (100), de préférence un système de freinage de véhicule (100) d'un véhicule utilitaire (202), comprenant
un logement (20) ;
une pièce de pression (16) conçue pour appliquer une force à au moins un système de valve (18) causée par un élément d'actionnement (12), en particulier une pédale de frein actionnable (14) et agencée de manière coulissante dans le logement (20) le long d'un axe de valve (22) entre une position neutre et une position d'actionnement ;
**caractérisé en ce que** ladite valve de freinage (10) comprend en outre un aimant (42) étant fixé à la pièce de pression (16) par un support d'aimant (64) ; et
dans laquelle le support d'aimant (64) comprend une portion en forme de selle (68), dans laquelle la portion en forme de selle (68) est reliée de façon détachable à la pièce de pression (16).

2. Valve de freinage (10) selon la revendication 1, dans laquelle le support d'aimant (64) peut être monté sur la pièce de pression (16) radialement par rapport à l'axe de valve (22).

3. Valve de freinage (10) selon la revendication 1 ou 2, dans laquelle la pièce de pression (16) comprend une portion de support (80), en particulier une rainure de support (81) et/ou un épaulement de support (82, 84), et dans laquelle la portion en forme de selle (68) du support d'aimant (64) vient en prise avec la portion de support (80) de la pièce de pression (16) dans l'état assemblé.

4. Valve de freinage selon la revendication 1, 2 ou 3, dans laquelle la portion en forme de selle (68) s'étend sur un angle circonférentiel (α) de plus de 180° et/ou de moins de 360°, dans laquelle, de préférence, la portion en forme de selle (68) s'étend sur un angle circonférentiel (α) dans une plage entre 200° et 220°.

5. Valve de freinage (10) selon l'une quelconque des revendications précédentes, dans laquelle la portion en forme de selle (68) est partiellement en forme d'anneau.

6. Valve de freinage (10) selon l'une quelconque des revendications précédentes, dans laquelle la portion en forme de selle (68) comprend au moins une première tige de selle (70) et au moins une seconde tige de selle (72).

7. Valve de freinage (10) selon l'une quelconque des revendications précédentes, dans laquelle le support d'aimant (68) comprend un support d'aimant (66) permettant de retenir l'aimant (42), dans laquelle la portion en forme de selle (68) est agencée radialement entre l'axe de valve (22) et le support d'aimant (66).

8. Valve de freinage (10) selon la revendication 7, dans laquelle le support d'aimant (66) et la portion en forme de selle (68) sont formés en une partie.

9. Valve de freinage (10) selon la revendication 7, dans laquelle le support d'aimant (66) et la portion en forme de selle (68) sont joints par un processus de surmoulage, par un processus de soudage par ultrasons, par un processus de poussée, par un raccord à encliqueter et/ou par collage.

10. Valve de freinage selon l'une quelconque des revendications précédentes, dans laquelle la portion en forme de selle (68) comprend au moins une nervure (92) surélevée parallèle à l'axe de valve (22) pour empêcher la pièce de pression (16) et/ou le support d'aimant (64) de vibrer.

11. Valve de freinage (10) selon l'une quelconque des revendications précédentes, dans laquelle le support d'aimant (64) comprend une paroi en forme d'anneau (86) s'étendant parallèle à l'axe de valve (22) pour fournir un guide pour la pièce de pression (16) et/ou le support d'aimant (64) et/ou l'aimant (42).

12. Valve de freinage (10) selon l'une quelconque des revendications précédentes, dans laquelle l'aimant (42) est surmoulé avec un matériau comprenant du polyoxyméthylène et/ou le support d'aimant (64), en particulier la portion en forme de selle (68) et/ou le support d'aimant (66), est fabriqué dans un matériau comprenant du polyoxyméthylène et/ou des fibres de verre.

13. Valve de freinage (10) selon la revendication 12, dans laquelle le matériau comprend plus de 50 % de polyoxyméthylène et/ou plus de 1 % de fibres de verre, de préférence environ 90 % de polyoxyméthylène et environ 10 % de fibres de verre.

14. Valve de freinage (10) selon l'une quelconque des revendications précédentes, dans laquelle l'aimant (42) est formé en tant qu'aimant en néodyme.

15. Valve de freinage (10) selon l'une quelconque des revendications précédentes, comprenant en outre un capteur de position (38) fixé soit directement soit indirectement à la valve de freinage (10), dans laquelle l'aimant (42) forme une partie mobile (40) d'un capteur de position (38) permettant de détecter la position de la pièce de pression (16) ; et
dans laquelle une partie stationnaire (44) du capteur de position (38) est agencée dans ou au niveau du logement (20), dans laquelle la partie mobile (40) du capteur de position (38) est agencée radialement entre l'axe de valve (22) et la partie stationnaire (44) du capteur de position (38).

16. Valve de freinage (10) selon la revendication 15, dans laquelle la partie stationnaire (44) du capteur de position (38) comprend un commutateur à lames (46) pour réveiller le capteur de position (38) d'un état désactivé et au moins un premier capteur à effet Hall (48) pour détecter le degré de l'actionnement de frein.

17. Valve de freinage (10) selon la revendication 15 ou 16, dans laquelle la partie stationnaire (44) du capteur de position (38) comprend au moins un premier capteur à effet Hall (48, 48a) et un second capteur à effet Hall (48b), dans laquelle les premier et second capteurs à effet Hall (48, 48a, 48b) sont, de préférence axialement espacés par rapport à l'axe de valve (22).

18. Valve de freinage (10) selon l'une quelconque des revendications 1 à 14, dans laquelle la valve de freinage comprend au moins un commutateur à lames (46) et au moins un capteur à effet Hall (48, 48a, 48b), dans laquelle l'aimant (42) est le seul aimant fourni au sein du logement (20), et dans laquelle l'aimant (42) est destiné à l'activation soit simultanée soit consécutive de l'au moins un commutateur à lames (46) et de l'au moins un capteur à effet Hall (48, 48a, 48b).

19. Valve de freinage (10) selon la revendication 18, dans laquelle l'au moins un capteur à effet Hall (48a, 48b) est un capteur à effet Hall 3D.

20. Système de freinage (100) destiné à un véhicule (200), comprenant une valve de freinage (10) selon l'une quelconque des revendications précédentes.

21. Véhicule (200), en particulier un véhicule utilitaire (202), comprenant un système de freinage (100) selon la revendication 20.

22. Procédé de fabrication (400) pour surmouler l'aimant (42) de la valve de freinage (10) selon la revendication 1, le procédé comprenant les étapes suivantes :
fourniture (S10) d'un aimant (42), en particulier un aimant en néodyme ;
magnétisation (S20) de l'aimant (42), facultativement ; et
surmoulage (S30) de l'aimant (42) avec un matériau comprenant au moins 50 % de polyoxyméthylène et au moins 1 % de fibres de verre.

23. Procédé de fabrication (400) selon la revendication 22, comprenant en outre les étapes suivantes une fois ou plusieurs fois :
test (S40) de la force magnétique de l'aimant (42) surmoulé ;
comparaison (S50) de la force magnétique testée à une valeur limite minimale ; et si nécessaire
magnétisation (S60) ou re-magnétisation de l'aimant (42).
